(19) Europäisches Patentamt
European Patent Office
Office européen des brevets

(11) **EP 3 485 052 B1**

(12) **FASCICULE DE BREVET EUROPEEN**

(45) Date de publication et mention de la délivrance du brevet:
**22.12.2021 Bulletin 2021/51**

(21) Numéro de dépôt: **17735583.1**

(22) Date de dépôt: **10.07.2017**

(51) Int Cl.:
*C22C 19/00* [(2006.01)]     *H01M 4/38* [(2006.01)]

(86) Numéro de dépôt international:
**PCT/EP2017/067266**

(87) Numéro de publication internationale:
**WO 2018/011140 (18.01.2018 Gazette 2018/03)**

(54) **MATIERE ACTIVE POUR ELECTRODE NEGATIVE D'ACCUMULATEUR ALCALIN DE TYPE NICKEL HYDRURE METALLIQUE**

STROMFÜHRENDE BAUTEILE FÜR NEGATIVE ELEKTRODE EINES ALKALISCHEN AKKUMULATORS VOM TYP NICKEL-METALLHYDRID

ACTIVE MATERIAL FOR A NEGATIVE ELECTRODE OF A NICKEL-METAL HYDRIDE ALKALINE ACCUMULATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.07.2016 FR 1656674**

(43) Date de publication de la demande:
**22.05.2019 Bulletin 2019/21**

(73) Titulaires:
• **Centre National de la Recherche Scientifique CNRS**
**75796 Paris 16 (FR)**
• **SAFT**
**92300 Lavallois-Perret (FR)**
• **Universite De Paris Est Creteil Val De Marne Upec**
**94010 Créteil Cedex (FR)**

(72) Inventeurs:
• **BERNARD, Patrick**
**33000 Bordeaux (FR)**
• **GOUBAULT, Lionel**
**33360 Carigan de Bordeaux (FR)**
• **DAVID, Stéphanie**
**17210 Bussac Forêt (FR)**
• **ZHANG, Junxian**
**91510 Lardy (FR)**
• **MONNIER, Judith**
**95300 Pontoise (FR)**
• **LATROCHE, Michel**
**94240 L'Hay Les Roses (FR)**
• **VIVIER, Vincent**
**94700 Maisons-Alfort (FR)**
• **JOIRET, Suzanne**
**60113 Braisnes (FR)**

(74) Mandataire: **Lavoix**
**2, place d'Estienne d'Orves**
**75441 Paris Cedex 09 (FR)**

(56) Documents cités:
**EP-A1- 1 179 868     EP-A1- 1 727 229**
**EP-A1- 2 487 270     EP-A1- 2 551 942**
**JP-A- 2000 021 398   US-B1- 6 248 475**

**Description**

DOMAINE TECHNIQUE

Le domaine technique auquel se rapporte l'invention est celui des alliages hydrurables pour électrode négative (anode) d'accumulateur à électrolyte alcalin de type nickel hydrure métallique (Ni-MH).

ETAT DE LA TECHNIQUE

Les accumulateurs de type nickel hydrure métallique sont couramment utilisés comme source d'énergie électrique. Ils sont par exemple utilisés pour alimenter des véhicules électriques, des véhicules hybrides, des véhicules hybrides rechargeables ou sont utilisés dans des dispositifs d'éclairage de sécurité (ELU pour Emergency Lighting Unit) ou pour les applications photovoltaïques. De tels accumulateurs comprennent typiquement au moins une électrode négative (anode) dont la matière électrochimiquement active est un alliage hydrurable, au moins une électrode positive (cathode) dont la matière électrochimiquement active est à base d'hydroxyde de nickel, et un électrolyte alcalin. L'alliage hydrurable présente la propriété d'absorber de l'hydrogène lors de la charge de l'accumulateur et de libérer cet hydrogène lors de la décharge.

Les alliages hydrurables de type $AB_5$ sont fréquemment utilisés comme matière électrochimiquement active des électrodes négatives des accumulateurs Ni-MH. Dans la formule $AB_5$, A représente un ou plusieurs éléments formant des hydrures stables dans les conditions normales de température et de pression, tels que les terres rares, et B représente un ou plusieurs éléments dont les hydrures sont instables dans ces mêmes conditions, par exemple le nickel. Néanmoins, un tel alliage ne répond pas de manière satisfaisante au besoin croissant en énergie des applications citées ci-avant. En effet, sa capacité spécifique est limitée à environ 300 mAh/g.

La durée de vie d'un accumulateur Ni-MH est limitée par la corrosion de l'alliage hydrurable. Ce phénomène de corrosion entraine une réduction de la capacité de l'électrode négative et un assèchement du faisceau électrochimique consécutif à la consommation d'eau par la réaction de corrosion. Il en résulte une augmentation de l'impédance de l'accumulateur et finalement, une réduction de sa durée de vie. L'augmentation de la durée de vie de l'accumulateur nécessite soit une amélioration de la résistance à la corrosion de l'alliage hydrurable, soit une augmentation du volume d'électrolyte en réduisant par exemple le volume de l'électrode positive. Cette dernière solution s'effectue néanmoins au détriment de la capacité initiale de l'accumulateur. Des recherches sont donc menées afin d'obtenir une matière active d'électrode négative offrant à la fois une capacité et une durée de vie élevées, ce qui permettrait d'augmenter le volume d'électrolyte sans toutefois pénaliser la capacité de l'électrode négative. Dans le but d'augmenter la capacité volumique de l'électrode négative, de nouveaux matériaux d'électrode négative ont été envisagés. On peut citer les familles d'alliages de stœchiométrie de type $AB_2$. Bien que la capacité initiale de ces alliages soit plus importante que celle d'un alliage de stœchiométrie $AB_5$, leur puissance et leur durée de vie sont considérablement réduites.

Il a été proposé l'utilisation d'un alliage de composition $(R, Mg)B_x$ où R représente un ou plusieurs éléments choisis parmi les terres rares, l'yttrium, Zr et Ti et B représente l'élément nickel partiellement substitué par d'autres éléments tels que Co, Mn, Al ou Fe, avec x compris entre 3 et 4. Ces alliages peuvent être constitués d'une ou plusieurs phases cristallines, telles que :

- la phase de composition $AB_5$ cristallisant dans le système hexagonal de type $CaCu_5$ ;
- les phases de composition $AB_2$, dites phases de Laves, cristallisant soit dans le système cubique : phase dite « C15 » de type $MgCu_2$, soit dans le système hexagonal : phases dites « C14 » de type $MgZn_2$ ou « C36 » de type $MgNi_2$ ;
- les phases de composition $AB_3$ cristallisant soit dans le système hexagonal (type $H-CeNi_3$), soit dans le système rhomboédrique (type $R-PuNi_3$) ;
- les phases de composition $A_2B_7$ cristallisant soit dans le système hexagonal (type $H-Ce_2Ni_7$), soit dans le système rhomboédrique (type $R-Gd_2Co_7$) ;
- les phases de composition $A_5B_{19}$ cristallisant soit dans le système hexagonal (type $H-Pr_5Co_{19}$), soit dans le système rhomboédrique (type $R-Ce_5Co_{19}$) ;
- la phase de composition $AB_4$.

Le document EP-A-1 727 229 décrit une composition de matière active comprenant :

a) un alliage hydrurable de formule $R_{1-y}Mg_yNi_{t-z}M_z$ dans laquelle

R représente La, éventuellement substitué par Nd et/ou Pr,
M représente au moins un élément choisi parmi Mn, Fe, Al, Co, Cu, Zr et Sn, $0{,}1 \leq y \leq 0{,}4$ ; $3{,}2 \leq t \leq 3{,}5$ ; $z \leq 0{,}5$,

et dont la pression d'hydrogène en équilibre avec l'alliage, pour une insertion d'hydrogène dans l'alliage de 0,5H/Métal à 40°C, est inférieure à 0,7 bar,

b) un composé à base d'yttrium en mélange avec l'alliage a).

Ce type d'alliage présente une capacité massique supérieure de 15% à celle des alliages de type $AB_5$.

Le document EP-A-2 487 270 décrit un alliage hydrurable de formule :
$R_{1-x-y}Mg_xM_yNi_{s-a}B_a$ dans laquelle

- R est choisi dans le groupe consistant en les terres rares, l'yttrium et un mélange de ceux-ci ;
- M représente Zr et/ou Ti ;
- B est choisi dans le groupe consistant en Mn, Al, Co, Fe et un mélange de ceux-ci ;

$0,1 < x < 0,4 ; 0 \leq y < 0,1 ; 3 < s < 4,5$ et $0 \leq a < 1$ ;
dont au moins 5% du volume est constitué d'un empilement de séquences d'un motif de type $A_2B_4$ et n motifs de type CaCu5 distribuées de façon aléatoire suivant une direction, n étant un nombre entier compris entre 1 et 10 et représentant le nombre de motifs de type CaCu5 par motif de type $A_2B_4$.

Les alliages hydrurables décrits dans ces deux documents présentent une cinétique de corrosion inférieure ou égale à celle d'un alliage de type $AB_5$. Cependant, il a été constaté que lorsqu'un accumulateur comprenant ces alliages est placé à une température de 70°C et est soumis à un faible courant de charge destiné à maintenir constant son état de charge (courant de « floating »), sa durée de vie est considérablement réduite. On recherche donc un accumulateur de type Ni-MH présentant une durée de vie élevée lorsque celui-ci est placé dans des conditions de maintien de son état de charge, à une température supérieure à la température ambiante. De préférence, on recherche un accumulateur de type Ni-MH qui présente une perte de capacité inférieure ou égale à 15%, lorsque celui-ci est utilisé pendant au moins 30 semaines dans des conditions de « floating» à une température d'environ 70°C. Les critères de durée de vie correspondent à un test réalisé à une température de 70°C.

RESUME DE L'INVENTION

A cet effet, l'invention propose un alliage hydrurable de formule :
$R_{1-x-y}Y_xMg_yNi_{s-z}M_z$ dans laquelle :

R représente un ou plusieurs éléments choisis parmi La, Ce, Nd, Pr, Gd, Sm ;
M représente un ou plusieurs éléments choisis parmi Mn, Fe, Al, Co, Cu, Zr, Sn et Cr ; $0.05 < x \leq 0,5$ ;
$0 \leq y \leq 0,3$ ;
$3,3 \leq s \leq 3,85$ et $0.05 < z \leq 0,5$ ;

ledit alliage comprenant au moins une phase cristalline de structure $A_2B_7$ et/ou au moins une phase cristalline de structure $A_5B_{19}$, la maille cristalline principale de la phase cristalline de structure $A_2B_7$ et/ou celle de la phase cristalline de structure $A_5B_{19}$ présentant un taux de déformation, mesuré avant hydruration, inférieur ou égal à 0,040% +/- 0,002%, le rayon atomique moyen des atomes constituant le groupe A étant inférieur ou égal à 1,810 A.

Selon un mode de réalisation, s=3,5+/-0,15 ou s va de 3,65 à 3,85, de préférence s=3,5 ou s=3,8.

Selon un mode de réalisation, $x \geq 0,05$, de préférence $x \geq 0,10$.

Selon un mode de réalisation, $x \leq 0,30$, de préférence $x \leq 0,25$.

Selon un mode de réalisation, $y \geq 0,05$, de préférence $y \geq 0,15$.

Selon un mode de réalisation, $y \leq 0,20$.

Selon un mode de réalisation, $z \geq 0,05$.

Selon un mode de réalisation, $z \leq 0,15$.

Selon un mode de réalisation, R est constitué des éléments La, Nd et Pr.

Selon un mode de réalisation, R est constitué des éléments La et Nd.

Dans ces deux derniers modes de réalisation, l'indice stœchiométrique du lanthane peut varier de 0,35 à 0,55 ; l'indice stœchiométrique du néodyme peut varier de 0,05 à 0,15 ; l'indice stœchiométrique du praséodyme, si présent, peut varier de 0,10 à 0,15.

Selon un mode de réalisation, M est constitué de Al.

Selon un mode de réalisation, le taux de déformation de la phase cristalline est inférieur ou égal à 0,035%, de préférence inférieur ou égal à 0,030%.

Selon un mode de réalisation, le rayon atomique moyen des atomes constituant le groupe A est inférieur ou égal à 1,801 A.

L'invention a également pour objet une électrode négative d'accumulateur alcalin de type nickel hydrure métallique comprenant un alliage tel que décrit ci-avant. Cette électrode peut comprendre en outre un composé de l'yttrium en une proportion telle que la masse d'yttrium de ce composé représente de 0,1 à 2% en masse de l'alliage hydrurable. Cette électrode peut comprendre en outre un composé de manganèse en une proportion telle que la masse de manganèse de ce composé représente de 1,5 à 2,5 % en masse de l'alliage hydrurable.

Enfin, l'invention a pour objet un accumulateur alcalin de type nickel hydrure métallique comprenant cette électrode.

BREVE DESCRIPTION DES FIGURES

La figure 1 représente un diagramme de diffraction des rayons X d'une phase cristalline de type $A_2B_7$.

La figure 2 représente la variation de la capacité nominale d'un accumulateur en fonction du nombre de semaines pendant lesquelles celui-ci est soumis à un courant de maintien de son état de charge, à une température de 70°C.

DESCRIPTION DETAILLEE DES MODES DE REALISATION DE L'INVENTION

La composition de matière active selon l'invention comprend un alliage hydrurable de formule $R_{1-x-y}Y_xMg_y$-$Ni_{s-z}M_z$ dans laquelle :

R représente un ou plusieurs éléments choisis parmi La, Ce, Nd, Pr, Gd, Sm ;
M représente un ou plusieurs éléments choisis parmi Mn, Fe, Al, Co, Cu, Zr, Sn et Cr ; $0.05 < x \leq 0,5$ ;
$0 \leq y \leq 0,3$ ;
$3,3 \leq s \leq 3,85$ et $0.05 < z \leq 0,5$ ;

ledit alliage comprenant au moins une phase cristalline de structure $A_2B_7$ et/ou au moins une phase cristalline de structure $A_5B_{19}$, la maille cristalline principale de la phase cristalline de structure $A_2B_7$ et/ou celle de la phase cristalline de structure $A_5B_{19}$ présentant un taux de déformation avant hydruration inférieur ou égal à 0,040%, le rayon atomique moyen des atomes constituant le groupe A étant inférieur ou égal à 1,810 A.

La Demanderesse a observé de manière surprenante, qu'en substituant au moins un des éléments La, Ce, Nd, Pr, Gd ou Sm par de l'yttrium, il était possible d'augmenter la durée de vie de l'accumulateur en « floating ». Le gain en durée de vie est corrélé au fait que cet alliage présente des caractéristiques de composition (substitution par l'yttrium) et de structure (faible rayon atomique moyen du groupe A, faible taux de déformation) qui lui confèrent une meilleure résistance à l'amorphisation durant le « floating » à 70°C. L'yttrium possède un rayon atomique de 1,776A, inférieur au rayon atomique de chacun des atomes La, Ce, Nd, Pr, Gd et Sm. La substitution d'une partie de ces éléments par de l'yttrium permet de diminuer le rayon atomique moyen des atomes constituant A. La réduction du rayon atomique moyen des atomes constituant A permet de limiter l'amorphisation de l'alliage hydrurable, néfaste à sa durée de vie. Le rayon atomique moyen des atomes constituant A doit être inférieur ou égal à 1,810 A. Le rayon atomique moyen des atomes constituant A peut être aisément calculé par l'homme du métier. Il se définit comme la moyenne arithmétique des rayons atomiques des atomes constituant A pondérée par la fraction atomique de chacun des atomes. Le rayon moyen r des atomes constituant A vaut donc :

$$r = f_{La} \times r_{La} + f_{Ce} \times r_{Ce} + f_{Nd} \times r_{Nd} + f_{Pr} \times r_{Pr} + f_{Gd} \times r_{Gd} + f_{Sm} \times r_{Sm} + f_Y \times r_Y + f_{Mg} \times r_{Mg}$$

où :

fi    désigne la fraction atomique de l'élément chimique i
$r_i$    désigne le rayon atomique de l'élément chimique i

Les rayons atomiques des éléments La, Ce, Nd, Pr, Gd, Sm, Y et Mg sont indiqués dans le tableau 1 ci-dessous :

Tableau 1

| Elément | La | Ce | Nd | Pr | Gd | Sm | Y | Mg |
|---|---|---|---|---|---|---|---|---|
| Rayon atomique (A) | 1,870 | 1,810 | 1,814 | 1,820 | 1,787 | 1,804 | 1,776 | 1,600 |

La proportion d'yttrium dans le groupe A est limitée à 50% ($0 < x \leq 0,5$) afin de conserver une pression de plateau d'hydrogène compatible avec une utilisation de l'alliage hydrurable dans un accumulateur étanche, dont la pression interne doit généralement rester dans la plage allant de 0,01 à 1 bar.

Selon un mode de réalisation, R est constitué des éléments La, Nd et Pr. Dans ce mode de réalisation, l'indice stœchiométrique du lanthane va de préférence de 0,35 à 0,55 ; celui du néodyme va de préférence de 0,05 à 0,15 et celui du praséodyme va de préférence de 0,10 à 0,15.

Selon un mode de réalisation, M est Al et/ou Co, de préférence Al. Al et Co favorisent la stabilité du matériau dans des conditions de cyclage. Dans ce mode de réalisation, l'indice stœchiométrique de l'aluminium ou du cobalt est généralement supérieur à 0,05 et inférieur à 0,20. Dans un mode de réalisation préféré, il va de 0,05 à 0,10.

La composition globale de l'alliage, c'est-à-dire la quantité et la nature de chacun des éléments chimiques le constituant, peut être déterminée par analyse chimique élémentaire par la méthode de spectroscopie d'émission plasma (ICP), la spectroscopie d'absorption atomique ou la spectroscopie de fluorescence des rayons X.

L'alliage selon l'invention contient au moins une phase cristalline de type $A_2B_7$ ou de type $A_5B_{19}$. La détection des phases cristallines de type $A_2B_7$ et/ou $A_5B_{19}$ peut être réalisée en utilisant un diffractomètre aux rayons X. L'analyse du diagramme de diffraction des rayons X permet de déterminer la nature des phases cristallines ainsi que leur quantité. Le volume de la ou des phases cristallines de type $A_2B_7$ ou $A_5B_{19}$ est de préférence supérieur ou égal à 10%, de préférence supérieur ou égal à 50%, de préférence encore supérieur ou égal à 70% par rapport au volume de l'alliage.

Une des caractéristiques de l'invention est que la maille cristalline principale de la phase cristalline de type $A_2B_7$ ou de type $A_5B_{19}$ présente un taux de déformation inférieur ou égal à 0,040% +/- 0,002%. Ce taux de déformation est mesuré avant hydruration de l'alliage. De préférence, ce taux de déformation est inférieur ou égal à 0,035%, de préférence encore, inférieur ou égal à 0,030%.

Les causes de la déformation de la maille cristalline sont multiples. Elle peut provenir d'une dispersion des distances interatomiques, d'une imperfection de l'alliage, par exemple liée à l'absence d'un atome sur un site, ou à la présence d'impuretés. La déformation de la maille cristalline se traduit sur le diagramme de diffraction des rayons X par un élargissement des pics.

Le taux de déformation de la maille peut être mesuré à partir d'un diagramme de diffraction X. L'élargissement des pics de diffraction est dû d'une part à l'appareillage et d'autre part à la microstructure du matériau (taille des cristallites, déformation de la maille cristalline). L'utilisation d'un logiciel d'analyse de profil de pics (programme informatique TOPAS commercialisé par la société Bruker par exemple) permet de déconvoluer les pics de diffraction et de déterminer la part de l'élargissement du pic liée à chacune des contributions : déformation de la maille (FWHMst), taille des cristallites (FWHMcs), instrument (FWHMinst).

Le taux de déformation $\varepsilon_0$ de la maille cristalline principale est déterminé à l'aide de la relation suivante :

$$\varepsilon_0 = \frac{\text{FWHMst}}{4 \times \tan\theta} \times 100$$

où :

- FWHMst est la largeur à mi-hauteur du pic de diffraction due uniquement à la déformation de la maille, exprimée en radians, obtenue par déconvolution du pic à l'aide du programme informatique d'analyse de pic (TOPAS par exemple).
- $\theta$ est la position en degrés (°) d'un pic de diffraction des rayons X produit par la phase cristalline principale.

La phase cristalline principale peut se déterminer en comparant le diagramme de diffraction obtenu par expérimentation avec des diagrammes de diffraction des rayons X de référence. Le centre international de données de diffraction (The International Centre for Diffraction Data® (ICDD®) fournit une base de données contenant ces diagrammes de référence. On peut par exemple citer la base de données PDF-4+.

Le taux de déformation peut également se définir par la relation suivante:

$$\varepsilon_0 = \frac{\Delta d_{hkl}}{d_{hkl}} \times 100$$

où :

$d_{hkl}$ représente la distance entre deux plans cristallins dont l'orientation est définie par les indices de Miller (hkl) ;
$\Delta d_{hkl}$ représente la variation de la distance $d_{hkl}$ due à la déformation de la maille cristalline.

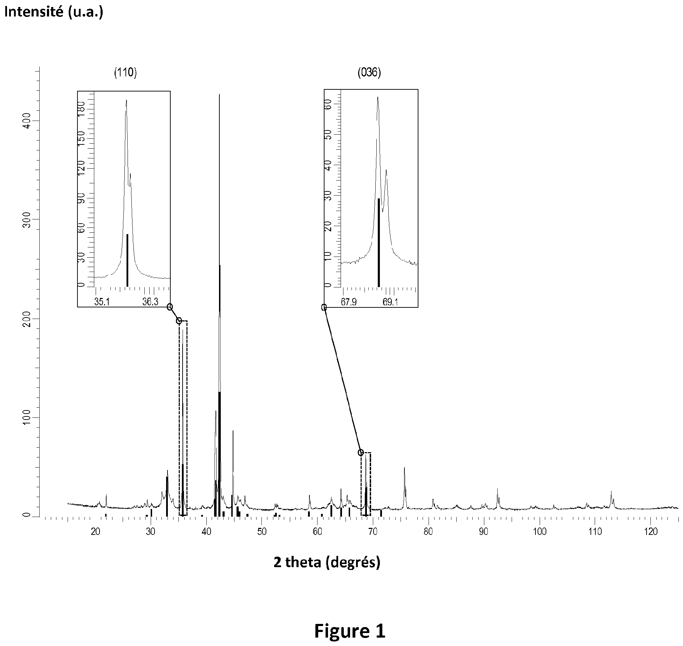

Dans le cas où la mesure est effectuée sur une phase cristalline de type $A_2B_7$, on choisira de préférence le pic de diffraction situé à la position $2\theta = 35,8°$ produit par la famille des plans dont l'orientation est définie par les indices de Miller (1 1 0). Dans le cas où la mesure est effectuée sur une phase cristalline de type $A_5B_{19}$, on choisira de préférence le pic de diffraction situé à la position $2\theta = 31,6°$ produit par la famille des plans dont l'orientation est définie par les indices de Miller (1 0 13). La position des pics de diffraction servant à la mesure du paramètre FWHMst est donnée ci-avant à titre indicatif. Des pics situés à d'autres positions du diagramme de diffraction peuvent aussi être utilisés. Par exemple, pour une phase cristalline de type $A_2B_7$, on pourra aussi choisir le pic de diffraction situé à la position $2\theta=68,7°$ produit par la famille des plans dont l'orientation est définie par les indices de Miller (0 3 6). Un diffractogramme montrant les pics mentionnés pour une phase cristalline de type $A_2B_7$ est représenté figure 1. Celle-ci montre en particulier un premier doublet de pics situé à une position $2\theta$ de 35,8°, produit par la famille des plans dont l'orientation est définie par les indices de Miller (1 1 0) et un second doublet de pics situé à une position $2\theta$ de 68,7°, produit par la famille des plans dont l'orientation est définie par les indices de Miller (0 3 6). Pour chacun de ces doublets, le pic de plus forte intensité correspond à la longueur d'onde d'émission Kα1 du cuivre, celle de plus faible intensité correspond à la longueur d'onde d'émission Kα2 du cuivre. Comme expliqué ci-avant, un logiciel de déconvolution permet de différencier et d'exploiter chacun des pics de diffraction de ce doublet.

L'alliage selon l'invention peut être élaboré en mélangeant les éléments chimiques ou des précurseurs constituant l'alliage et en provoquant la fusion du mélange. La fusion du mélange peut être suivie d'un refroidissement lent (métallurgie classique), ou d'un refroidissement rapide (trempe) en utilisant par exemple la technique de la coulée en bande mince (« strip casting ») sur simple rouleau ou entre doubles rouleaux, ou encore être un refroidissement ultra rapide (hypertrempe) en utilisant la technique de trempe sur roue (« melt spinning ») ou de flot planaire (« planar flow casting ») sur simple rouleau ou entre doubles rouleaux.

L'alliage selon l'invention peut également être élaboré par métallurgie des poudres (frittage) à partir des éléments purs ou de précurseurs.

L'alliage selon l'invention peut également être élaboré par mécanosynthèse en mélangeant sous atmosphère inerte des précurseurs de l'alliage dans les quantités stoechiométriques désirées, puis en broyant le mélange à l'aide par exemple d'un broyeur à billes. On entend par mécanosynthèse l'ensemble des techniques de matériaux dans lesquelles l'énergie d'activation de la réaction chimique entre les précurseurs est apportée par des moyens mécaniques.

Après obtention de l'alliage par l'une des techniques décrites ci-dessus, celui-ci peut subir un recuit. Les microdéformations structurales de l'alliage après fusion peuvent être limitées par un traitement de recuit à des températures proches de 900°C pendant au moins deux jours sous atmosphère inerte (argon).

L'alliage hydrurable obtenu peut être réduit en poudre par broyage de manière à ce que la taille des particules soit caractérisée par un diamètre médian en volume Dv50 allant de 30 à 120 $\mu$m, de préférence allant de 50 à 100 $\mu$m. Dans un autre mode de réalisation, le diamètre médian en volume Dv50 va de 120 à 200 $\mu$m.

L'invention concerne aussi une électrode négative d'un accumulateur alcalin de type nickel-hydrure métallique, ladite électrode négative comprenant l'alliage selon l'invention comme matière électrochimiquement active.

L'électrode négative est fabriquée en empâtant un support conducteur électrique avec une pâte constituée d'un mélange aqueux de l'alliage selon l'invention, avec des additifs et éventuellement avec des agents conducteurs.

Le support peut être une mousse de nickel, un feuillard perforé plan ou tridimensionnel, en nickel ou en acier nickelé.

Les additifs sont destinés à faciliter la mise en œuvre ou les performances de l'électrode négative. Ils peuvent être des épaississants tels que la carboxyméthylcellulose (CMC), l'hydroxypropylméthylcellulose (HPMC), le polyacideacrylique (PAAc), le poly(oxyde d'éthylène) (PEO). Ils peuvent aussi être des liants tels que les copolymères de butadiène-styrène (SBR), le polystyrène acrylate (PSA), le polytétrafluoroéthylène (PTFE). Ils peuvent être aussi des fibres polymères, telles que le polyamide, le polypropylène, le polyéthylène, etc., pour améliorer les propriétés mécaniques de l'électrode.

Les agents conducteurs peuvent être de la poudre de nickel, de la poudre, des fibres de carbone ou des nanotubes.

L'alliage peut être mélangé avec un composé d'yttrium, donc distinct de l'yttrium contenu dans l'alliage, afin d'augmenter la durée de vie en cyclage de l'électrode négative. Le composé à base d'yttrium est choisi dans une liste non exhaustive comprenant un oxyde à base d'yttrium tel que $Y_2O_3$, un hydroxyde à base d'yttrium tel que $Y(OH)_3$ ou un sel d'yttrium. De préférence, le composé à base d'yttrium est l'oxyde d'yttrium $Y_2O_3$.

Le composé à base d'yttrium est mélangé à l'alliage en une proportion telle que la masse d'yttrium représente de 0,1 à 2 % de la masse de l'alliage, de préférence de 0,2 à 1 % de la masse d'alliage, de préférence de 0,2 à 0,7 % de la masse d'alliage.

Le procédé d'ajout du composé à base d'yttrium à la matière active durant la fabrication de l'électrode négative est simple à mettre en œuvre industriellement. Il ne nécessite pas de dispositifs complexes.

Selon un mode de réalisation préféré, l'alliage hydrurable selon l'invention est mélangé avec un composé à base de manganèse choisi dans une liste non exhaustive comprenant des oxydes comme MnO, $MnO_2$, ou un hydroxyde

ou un sel à base de manganèse. De préférence, le composé à base de manganèse est l'oxyde MnO. Le mélange de l'alliage avec un composé de manganèse a pour effet d'empêcher ou de retarder l'apparition de micro courts-circuits attribués à des dépôts de cobalt provenant de l'électrode positive ou de l'électrode négative, dans le séparateur au cours du cyclage de l'accumulateur. Ces micros courts-circuits engendrent en effet une autodécharge exacerbée qui se traduit par une accélération de la réduction de la capacité restituée en décharge. La proportion massique de manganèse dans l'électrode négative est comprise entre 1,5 et 2,5 % de la masse d'alliage hydrurable.

Avantageusement, l'électrode négative est recouverte d'une couche de surface destinée à améliorer la décharge à régime élevé et/ou la recombinaison de l'oxygène produit en fin de charge de l'accumulateur. La couche de surface peut être par exemple composée de carbone et d'un polymère fluoré tel que le polytétrafluoroéthylène (PTFE).

L'invention concerne aussi un accumulateur à électrolyte alcalin comprenant au moins une électrode négative selon l'invention, au moins une électrode positive dont la matière électrochimiquement active est un hydroxyde de nickel, au moins un séparateur et un électrolyte alcalin.

L'électrode positive est constituée d'une masse active cathodique déposée sous forme d'une pâte sur un support qui peut être un support fritté, une mousse de nickel, un feuillard perforé plan ou tridimensionnel en nickel ou en acier nickelé.

La masse active cathodique comprend la matière électrochimiquement active cathodique et des additifs destinés à faciliter sa mise en œuvre ou ses performances. La matière électrochimiquement active cathodique est un hydroxyde de nickel $Ni(OH)_2$ qui peut être partiellement substitué par Co, Mg et Zn. Cet hydroxyde peut être partiellement oxydé et peut être revêtu d'une couche de surface à base de composés du cobalt.

Parmi les additifs utilisés pour l'électrode positive, on peut citer, sans que cette liste soit exhaustive, la carboxyméthylcellulose (CMC), l'hydroxypropylméthylcellulose (HPMC), l'hydroxypropylcellulose (HPC), l'hydroxyéthylcellulose (HEC), le polyacideacrylique (PAAc), le polystyrène maléique anhydride (SMA), les copolymères de butadiène-styrène (SBR), éventuellement carboxylé, un copolymère d'acrylonitrile et de butadiène (NBR), un copolymère de styrène, d'éthylène, de butylène et de styrène (SEBS), un terpolymère de styrène, de butadiène et de vinylpyridine (SBVR), le polystyrène acrylate (PSA), le polytétrafluoroéthylène (PTFE), un copolymère fluoré d'éthylène et de propylène (FEP), le polyhexa-fluoropropylène (PPHF), l'éthylvinylalcool (EVA), l'oxyde de zinc ZnO, des fibres (Ni, C, polymères), des poudres de composés à base de cobalt tels que Co, $Co(OH)_2$, CoO, $Li_xCoO_2$, $H_xCoO_2$, $Na_xCoO_2$.

Le séparateur est généralement composé de fibres en polyoléfine (par ex. polypropylène) ou polyamide poreux non-tissé.

L'électrolyte est une solution aqueuse alcaline concentrée comprenant au moins un hydroxyde (KOH, NaOH, LiOH), en une concentration généralement de l'ordre de plusieurs fois la normalité.

De façon classique, on prépare les pâtes positives et négatives pour les électrodes. On fabrique les électrodes, puis on superpose au moins une électrode positive, un séparateur et une électrode négative afin de constituer le faisceau électrochimique. On introduit le faisceau électrochimique dans un godet conteneur et on l'imprègne avec l'électrolyte alcalin aqueux. On ferme ensuite l'accumulateur.

L'invention concerne tout format d'accumulateur : format prismatique (électrodes planes) ou format cylindrique (électrodes spiralées ou concentriques).

L'accumulateur Ni-MH selon l'invention peut être du type ouvert (ouvert ou semi-ouvert) ou du type étanche.

L'invention trouve en particulier une application dans les secteurs où un accumulateur de type Ni-MH doit être maintenu à son plein état de charge pendant une longue durée, par exemple le secteur des télécommunications, ou celui des dispositifs d'éclairage de secours ou encore celui des dispositifs de production d'électricité de secours en cas de coupure de courant sur le réseau électrique.

EXEMPLES

Deux alliages hydrurables ont été synthétisés. Leur composition est indiquée dans le tableau 2 ci-dessous. L'alliage C1 est un alliage de référence. L'alliage C2 est selon l'invention. Les alliages sont préparés en deux étapes par métallurgie des poudres. Ils sont obtenus par la préparation d'un précurseur à base des éléments de terres rares, d'aluminium et de nickel obtenu par fusion dans un four à haute fréquence. Le précurseur est ensuite broyé, mélangé avec du magnésium en poudre puis introduit dans un creuset en acier scellé sous atmosphère inerte d'argon. Ce creuset scellé est ensuite traité thermiquement à 900°C pendant 2 jours.

Tableau 2

| | La | Nd | Pr | Y | Mg | Al | Ni | s | Capacité (mAh/g) | P* (bar) | $r$ (A) | Taux de déformation (%)** |
|---|---|---|---|---|---|---|---|---|---|---|---|---|
| Alliage C1 de référence | 0,3 | 0,14 | 0,40 | - | 0,16 | 0,08 | 3,29 | 3,37 | 340 | 0,17 | 1,799 | 0,049 |
| Alliage C2 selon l'invention | 0,52 | 0,10 | 0 | 0,22 | 0,16 | 0,08 | 3,29 | 3,37 | 340 | 0,10 | 1,801 | 0,032 |

* P est la pression d'hydrogène en équilibre avec l'alliage, pour une insertion d'hydrogène dans l'alliage de 0,5 H/Métal à 40°C. Le rapport H/Métal est le rapport entre le nombre de moles d'atomes d'hydrogène insérés dans l'alliage et le nombre de moles d'atomes de métal de l'alliage. On désigne par le terme « Métal », l'ensemble des métaux contenus dans l'alliage, c'est-à-dire R, Y, Mg, Ni et M. La pression d'hydrogène à l'équilibre à 40°C pour une insertion d'hydrogène de 0,5 H/Métal est mesurée à partir du tracé de la courbe isotherme de désorption d'hydrogène par l'alliage.

** Le taux de déformation a été mesuré en exploitant le pic de diffraction (110) produit par les plans cristallins de la maille cristalline de type $A_2B_7$.

Les alliages C1 et C2 ont été caractérisés par diffraction des rayons X à l'aide d'un diffractomètre Bruker AXS D8 Advance θ-θ (géométrie Bragg-Brentano, rayonnement Cu Kal, 2, domaine angulaire en 2θ allant de 10 à 125° par pas de 0,02°). La détermination des phases et l'analyse microstructurale ont été réalisées à l'aide du programme TOPAS de la société Bruker. L'analyse chimique locale a été effectuée à l'aide d'une microsonde électronique en spectroscopie dispersive en longueur d'onde (WDS-EPMA Wavelength Dispersive Spectroscopy-Electron Probe Micro Analysis) CAMEBAX SX-100.

L'alliage C1 ne fait pas partie de l'invention car il ne contient pas d'yttrium et la maille $A_2B_7$ présente un taux de déformation supérieur à 0,040%. L'alliage C2 contient de l'yttrium et présente un taux de déformation de 0,032%. Ce taux de déformation plus faible que celui de C1 peut s'expliquer par la présence d'yttrium. D'une part, le rayon de l'yttrium est plus faible que celui des autres terres rares, ce qui permet de diminuer localement les contraintes dans le matériau. D'autre part, l'yttrium est plus léger que les autres terres rares et, à traitement thermique équivalent, se répartit mieux dans la maille cristallographique par une meilleure diffusion. Les deux alliages C1 et C2 présentent une pression d'hydrogène en équilibre avec l'alliage de 0,17 et 0,10 bar respectivement. Ces valeurs sont compatibles avec le fonctionnement en mode étanche d'un accumulateur Ni-MH.

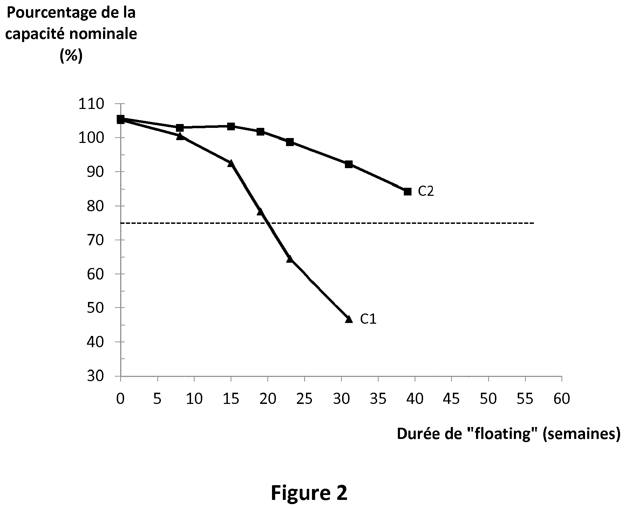

Deux accumulateurs ont été fabriqués. L'un des accumulateurs possède une électrode négative contenant l'alliage C1. Le second possède une électrode négative contenant l'alliage C2. La capacité massique initiale des deux accumulateurs a été mesurée et vaut 340 mAh/g. Ils ont été soumis à une charge sous un courant de « floating ». La capacité massique a été mesurée tous les sept jours. La variation de la capacité massique mesurée a été tracée en fonction de la durée d'application du courant de « floating ». Elle est représentée à la figure 2. Cette figure montre que l'alliage C2 selon l'invention présente une capacité qui décroit beaucoup moins vite que celle de l'alliage C1 de référence. En effet, la capacité de l'accumulateur dont l'électrode négative contient l'alliage C2 décroit d'environ 15% après environ 30 semaines de « floating » tandis que celle de l'accumulateur dont l'électrode négative contient l'alliage C1 décroit d'environ 65% pour la même période de « floating ». On peut noter également que la durée de vie de l'accumulateur dont l'électrode négative contient l'alliage C1 va bien au-delà des 30 semaines. Le critère communément employé pour déterminer la fin de vie d'un accumulateur est celui d'une baisse de 25% de sa capacité nominale. Or, après 30 semaines de « floating », la perte de capacité de l'accumulateur dont l'électrode négative contient l'alliage C2 est bien en deçà des 25%. Ces résultats démontrent donc l'effet bénéfique de la présence d'yttrium comme élément de substitution des éléments terres rares La, Ce, Nd, Sm et Gd, sur la durée de vie en « floating » d'un accumulateur Ni-MH.

Après 30 semaines de « floating », les accumulateurs sont déchargés jusqu'à une tension de 0,8V et une analyse par Diffraction des Rayons X est réalisée sur l'électrode négative. Le tableau 3 ci-dessous montre que le taux de déformation de la maille $A_2B_7$ dans le cas de l'alliage C2 est nettement inférieur à celui de l'alliage C1. Ce résultat met en évidence l'effet bénéfique de la présence d'yttrium comme élément de substitution des éléments terres rares La, Ce, Nd, Sm et Gd sur la stabilité de la phase $A_2B_7$, lorsque l'accumulateur est placé en « floating » à température élevée.

Tableau 3

| | Alliage C1 de référence | Alliage C2 selon l'invention |
|---|---|---|
| Taux de déformation $A_2B_7$ initial * (%) | 0,049 | 0,032 |
| Taux de déformation $A_2B_7$ après 23 semaines *(%) | 0,257 | 0,147 |
| * Le taux de déformation a été mesuré en exploitant le pic de diffraction (110) produit par les plans cristallins de la maille cristalline de type $A_2B_7$. | | |

**Revendications**

1. Alliage hydrurable de formule $R_{1-x-y}Y_xMg_yNi_{s-z}M_z$ dans laquelle :

   R représente un ou plusieurs éléments choisis parmi La, Ce, Nd, Pr, Gd, Sm ;
   M représente un ou plusieurs éléments choisis parmi Mn, Fe, Al, Co, Cu, Zr, Sn et Cr ;
   $0,05 \leq x \leq 0,5$ ;
   $0 \leq y \leq 0,3$ ;
   $3,3 \leq s \leq 3,85$ et
   $0,05 \leq z \leq 0,5$ ;
   ledit alliage comprenant au moins une phase cristalline de structure $A_2B_7$ et/ou au moins une phase cristalline de structure $A_5B_{19}$, la maille cristalline principale de la phase cristalline de structure $A_2B_7$ et/ou celle de la phase cristalline de structure $A_5B_{19}$ présentant un taux de déformation, mesuré avant hydruration, inférieur ou égal à 0,040% +/- 0,002%, le rayon atomique moyen des atomes constituant le groupe A étant inférieur ou égal à 1,810 Å.

2. Alliage hydrurable selon la revendication 1 dans lequel s = 3,5 +/- 0,15 ou s va de 3,65 à 3,85, de préférence s = 3,5 ou s = 3,8.

3. Alliage hydrurable selon l'une des revendications précédentes, dans lequel $x \geq 0,10$.

4. Alliage hydrurable selon l'une des revendications précédentes, dans lequel $x \leq 0,30$, de préférence $x \leq 0,25$.

5. Alliage hydrurable selon l'une des revendications précédentes, dans lequel $y \geq 0,05$, de préférence $y \geq 0,15$.

6. Alliage hydrurable selon l'une des revendications précédentes, dans lequel $y \leq 0,20$.

7. Alliage hydrurable selon l'une des revendications précédentes, dans lequel $z \leq 0,15$.

8. Alliage hydrurable selon l'une des revendications précédentes, dans lequel R est constitué des éléments La, Nd et Pr.

9. Alliage hydrurable selon l'une des revendications 1 à 7, dans lequel R est constitué des éléments La et Nd.

10. Alliage hydrurable selon la revendication 8 ou 9, dans lequel l'indice stœchiométrique du lanthane va de 0,35 à 0,55.

11. Alliage hydrurable selon la revendication 8, 9 ou 10 dans lequel l'indice stœchiométrique du néodyme va de 0,05 à 0,15.

12. Alliage hydrurable selon la revendication 8, 10 ou 11 dans lequel l'indice stœchiométrique du praséodyme va de 0,10 à 0,15.

13. Alliage hydrurable selon l'une des revendications précédentes, dans lequel M est constitué de Al.

14. Alliage hydrurable selon l'une des revendications précédentes, dans lequel le taux de déformation de la phase cristalline est inférieur ou égal à 0,035%, de préférence inférieur ou égal à 0,030%.

15. Alliage hydrurable selon l'une des revendications précédentes, dans lequel le rayon atomique moyen des atomes constituant le groupe A est inférieur ou égal à 1,801 Å.

16. Electrode négative d'accumulateur alcalin de type nickel hydrure métallique, comprenant un alliage selon l'une des revendications 1 à 15.

17. Electrode selon la revendication 16 comprenant en outre un composé de l'yttrium en une proportion telle que la masse d'yttrium de ce composé représente de 0,1 à 2% en masse de l'alliage hydrurable.

18. Electrode selon l'une des revendications 16 à 17 comprenant en outre un composé de manganèse en une proportion telle que la masse de manganèse de ce composé représente de 1,5 à 2,5 % en masse de l'alliage hydrurable.

19. Accumulateur alcalin de type nickel hydrure métallique comprenant une électrode selon l'une des revendications 16 à 18.

**Patentansprüche**

1. Wasserstoffaufnehmende Legierung mit der Formel $R_{1-x-y}Y_xMg_yNi_{s-z}M_z$, wobei:

R ein oder mehrere Elemente darstellt, ausgewählt aus La, Ce, Nd, Pr, Gd, Sm;
M eines oder mehrere Elemente darstellt, ausgewählt aus Mn, Fe, Al, Co, Cu, Zr, Sn und Cr;
$0,05 \leq x \leq 0,5$;
$0 \leq y \leq 0,3$;
$3,3 \leq s \leq 3,85$ und

$0{,}05 \leq z \leq 0{,}5$;

wobei die Legierung mindestens eine kristalline Phase mit der Struktur $A_2B_7$ und/oder mindestens eine kristalline Phase mit der Struktur $A_5B_{19}$ umfasst, wobei das Hauptkristallgitter der kristallinen Phase mit der Struktur $A_2B_7$ und/oder dasjenige mit der kristallinen Phase mit der Struktur $A_5B_{19}$ einen Verformungsgrad, gemessen vor der Wasserstoffaufnahme, geringer als oder gleich wie 0,040 % +/- 0,002 % aufweist, wobei der mittlere Atomstrahl der Atome, der die Gruppe A bildet, geringer als oder gleich wie 1,810 A ist.

2. Wasserstoffaufnehmende Legierung nach Anspruch 1, wobei s = 3,5 +/- 0,15 oder s von 3,65 bis 3,85 reicht, vorzugsweise s = 3,5 oder s = 3,8.

3. Wasserstoffaufnehmende Legierung nach einem der vorhergehenden Ansprüche, wobei $x \geq 0{,}10$.

4. Wasserstoffaufnehmende Legierung nach einem der vorhergehenden Ansprüche, wobei $x \leq 0{,}30$, vorzugweise $x \leq 0{,}25$.

5. Wasserstoffaufnehmende Legierung nach einem der vorhergehenden Ansprüche, wobei $y \geq 0{,}05$, vorzugsweise $y \geq 0{,}15$.

6. Wasserstoffaufnehmende Legierung nach einem der vorhergehenden Ansprüche, wobei $y \leq 0{,}20$.

7. Wasserstoffaufnehmende Legierung nach einem der vorhergehenden Ansprüche, wobei $z \leq 0{,}15$.

8. Wasserstoffaufnehmende Legierung nach einem der vorhergehenden Ansprüche, wobei R aus den Elementen La, Nd und Pr besteht.

9. Wasserstoffaufnehmende Legierung nach einem der Ansprüche 1 bis 7, wobei R aus den Elementen La und Nd besteht.

10. Wasserstoffaufnehmende Legierung nach Anspruch 8 oder 9, wobei der stöchiometrische Index des Lanthans von 0,35 bis 0,55 reicht.

11. Wasserstoffaufnehmende Legierung nach Anspruch 8, 9 oder 10, wobei der stöchiometrische Index von Neodym von 0,05 bis 0,15 reicht.

12. Wasserstoffaufnehmende Legierung nach Anspruch 8, 10 oder 11, wobei der stöchiometrische Index von Praseodym von 0,10 bis 0,15 reicht.

13. Wasserstoffaufnehmende Legierung nach einem der vorhergehenden Ansprüche, wobei M aus Al besteht.

14. Wasserstoffaufnehmende Legierung nach einem der vorhergehenden Ansprüche, wobei der Verformungsgrad der kristallinen Phase geringer als oder gleich wie 0,035 %, vorzugsweise geringer als oder gleich wie 0,030 % ist.

15. Wasserstoffaufnehmende Legierung nach einem der vorhergehenden Ansprüche, wobei der mittlere Atomstrahl der Atome, die die Gruppe A bilden, geringer als oder gleich wie 1,801 A ist.

16. Negative Elektrode eines alkalischen Akkumulators vom Typ Nickel-Metallhydrid, umfassend eine Legierung nach einem der Ansprüche 1 bis 15.

17. Elektrode nach Anspruch 16, umfassend außerdem eine Verbindung von Yttrium in einer derartigen Proportion, dass die Masse von Yttrium dieser Verbindung von 0,1 bis 2 Massenprozent der wasserstoffaufnehmenden Legierung darstellt.

18. Elektrode nach einem der Ansprüche 16 bis 17, umfassend außerdem eine Verbindung von Mangan in einer derartigen Proportion, dass die Masse von Mangan dieser Verbindung von 1,5 bis 2,5 Massenprozent der wasserstoffaufnehmenden Legierung darstellt.

19. Alkalischer Akkumulator vom Typ Nickel-Metallhydrid, umfassend eine Elektrode nach einem der Ansprüche 16 bis 18.

**EP 3 485 052 B1**

**Claims**

1. A hydridable alloy of formula $R_{1-x-y}Y_xMg_yNi_{s-z}M_z$ where:

    R is one or more elements selected from among La, Ce, Nd, Pr, Gd, Sm;
    M is one or more elements selected from among Mn, Fe, Al, Co, Cu, Zr, Sn and Cr;
    $0.05 \leq x \leq 0.5$
    $0 \leq y \leq 0.3$;
    $3.3 \leq s \leq 3.85$ and
    $0.05 \leq z \leq 0.5$;
    said alloy comprising at least one crystalline phase of structure $A_2B_7$ and/or at least one crystalline phase of structure $A_5B_{19}$, the main crystalline lattice of the crystalline phase of structure $A_2B_7$ and/or that of the crystalline phase of structure $A_5B_{19}$ having a strain rate, measured before hydriding, less than or equal to 0.040 % $\pm$ 0.002 %, the mean atomic radius of the atoms forming group A being less than or equal to 1.810 Å.

2. The hydridable alloy according to claim 1, wherein s = 3.5 $\pm$ 0.15, or s ranges from 3.65 to 3.85, preferably s = 3.5 or s = 3.8.

3. The hydridable alloy according to one of the preceding claims, wherein $x \geq 0.10$.

4. The hydridable alloy according to one of the preceding claims, wherein $x \leq 0.30$, preferably $x \leq 0.25$.

5. The hydridable alloy according to one of the preceding claims, wherein $y \geq 0.05$, preferably $y \geq 0.15$.

6. The hydridable alloy according to one of the preceding claims, wherein $y \leq 0.20$.

7. The hydridable alloy according to one of the preceding claims, wherein $z \leq 0.15$.

8. The hydridable alloy according to one of the preceding claims, wherein R is composed of the elements La, Nd and Pr.

9. The hydridable alloy according to one of claims 1 to 7, wherein R is composed of the elements La and Nd.

10. The hydridable alloy according to claim 8 or 9, wherein the stoichiometric number of lanthanum ranges from 0.35 to 0.55.

11. The hydridable alloy according to claim 8, 9 or 10, wherein the stoichiometric number of neodymium ranges from 0.05 to 0.15

12. The hydridable alloy according to claim 8, 10 or 11, wherein the stoichiometric number of praseodymium ranges from 0.10 to 0.15.

13. The hydridable alloy according to one of the preceding claims, wherein M is composed of Al.

14. The hydridable alloy according to one of the preceding claims, wherein the strain rate of the crystalline phase is less than or equal to 0.035 %, preferably less than or equal to 0.030 %.

15. The hydridable alloy according to one of the preceding claims, wherein the mean atomic radius of the atoms forming group A is less than or equal to 1.801 Å.

16. A negative electrode of an alkaline rechargeable battery of nickel-metal hydride type, comprising an alloy according to one of claims 1 to 15.

17. The electrode according to claim 16 further comprising an yttrium compound in a proportion such that the mass of yttrium of this compound represents from 0.1 to 2 mass % of the hydridable alloy.

18. The electrode according to one of claims 16 to 17 further comprising a manganese compound in a proportion such that the mass of manganese of this compound represents from 1.5 to 2.5 mass % of the hydridable alloy.

**19.** An alkaline rechargeable battery of nickel-metal hydride type comprising an electrode according to one of claims 16 to 18.

**Intensité (u.a.)**

**2 theta (degrés)**

**Figure 1**

Figure 2

**EP 3 485 052 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1727229 A

- EP 2487270 A